# EUROPEAN PATENT APPLICATION

(11) **EP 2 469 842 A1**
(43) Date of publication of application: **27.06.2012**
(21) Application number: 11174316.7
(22) Date of filing: 18.07.2011
(51) Int. Cl.: H04N 5/445, H04N 21/431, H04N 21/482

(54) **Recorder and recording method**

(30) Priority: 24.12.2010 JP 2010288596
(71) Applicant: Kabushiki Kaisha Toshiba, Tokyo 105-8001 (JP)
(72) Inventor: Tokunaga, Akinori, Tokyo, 105-8001 (JP); Yoshida, Osamu, Tokyo, 105-8001 (JP); Okada, Koji, Tokyo, 105-8001 (JP)
(74) Representative: HOFFMANN EITLE

(57) **Abstract**

According to one embodiment, a recorder (100) includes a display controller (117c), a time-slot selector (117a), and a simultaneous recorder (118). The display controller (117c) displays a simultaneous recording program list (400) indicating time slots, in which programs on multiple channels are broadcasted, arranged with respect to each day. The time-slot selector (117a) selects one or more time slots from the time slots arranged on the simultaneous recording program list (400) displayed by the display controller (117c). The simultaneous recorder (118) simultaneously records programs on multiple channels broadcasted in the time slots selected by the time-slot selector (117a). The display controller (117c) displays information related to the programs on the multiple channels broadcasted in the time slots selected by the time-slot selector (117a) together with the simultaneous recording program list (400).

## Description

### FIELD

Embodiments described herein relate generally to a recorder and a recording method.

### BACKGROUND

In recent years, there has been increasing use of recorders such as hard disk drive (HDD) recorders and digital televisions having the function of simultaneously recording programs on multiple channels.

Some of such recorders with the simultaneous recording function display time slots during which programs on multiple channels are delivered on a one-hour basis with respect to each day, and simultaneously record programs on multiple channels corresponding to a time slot selected from the displayed time slots. In this manner, if time slots during which programs on multiple channels are delivered are displayed on a one-hour basis with respect to each day, information on programs delivered in each time slot is not displayed. This makes it difficult to select a time slot to record desired programs upon selecting of a time slot for simultaneous recording.

### SUMMARY

According to an embodiment, a recorder comprises a display controller, a time-slot selector, and a simultaneous recorder. The display controller is configured to display a simultaneous recording program list indicating time slots, in which programs on multiple channels are broadcasted, arranged with respect to each day. The time-slot selector is configured to select at least one time slot from the time slots arranged on the simultaneous recording program list displayed by the display controller. The simultaneous recorder is configured to simultaneously record programs on multiple channels broadcasted in the time slot selected by the time-slot selector. The display controller is configured to display related information related to the programs on the multiple channels broadcasted in the time slot selected by the time-slot selector together with the simultaneous recording program list.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a digital television (TV) according to an embodiment;
FIG. 2 is a plane view of the exterior of a remote controller in the embodiment;
FIG. 3 is an exemplary block diagram of a functional block related to recording of content data in the digital TV in the embodiment;
FIGS. 4 and 5 are exemplary schematic diagrams of a simultaneous recording program list displayed on a display module in the embodiment;
FIG. 6 is an exemplary diagram of display of a program guide in the embodiment; and
FIG. 7 is an exemplary flowchart of the process of selecting a time slot for simultaneous recording from the simultaneous recording program list in the embodiment.

### DETAILED DESCRIPTION

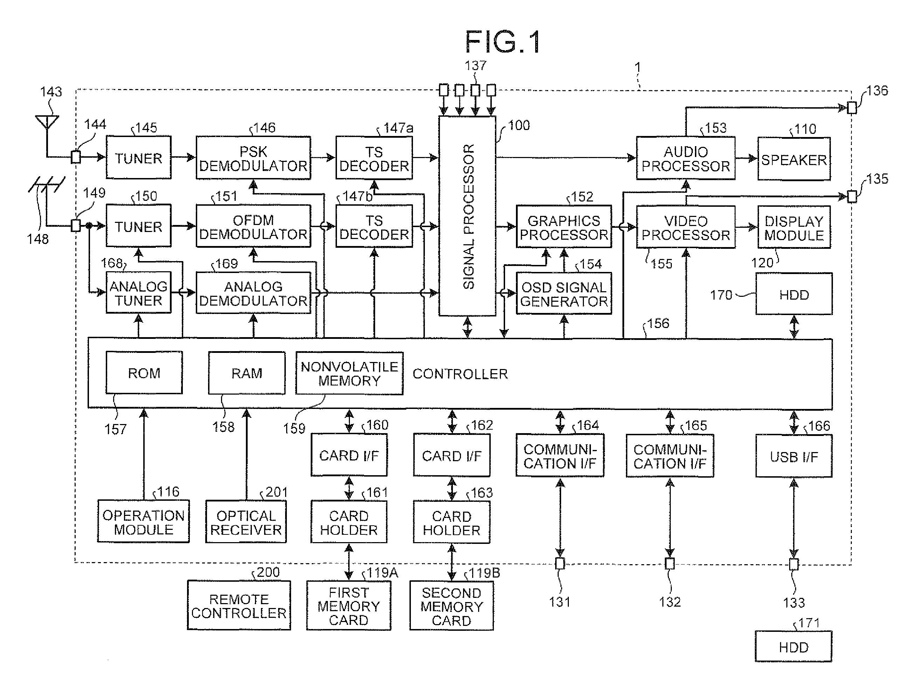

FIG. 1 is a block diagram of a digital television (TV) 1 according to an embodiment.

The digital TV 1 comprises a controller 156 that controls the overall operation of the digital TV 1. The controller 156 comprises a built-in central processing unit (CPU). The controller 156 executes a system control program and various processing programs stored in advance in a read only memory (ROM) 157 in response to an operation signal received from an operation module 116 or an operation signal sent from a remote controller 200 and received via an optical receiver 201. According to the programs, the controller 156 controls the operation of each module using a random access memory (RAM) 158 as a work memory. Various types of setting information and control information necessary to control the operation of each module are stored in, for example, a nonvolatile memory 159.

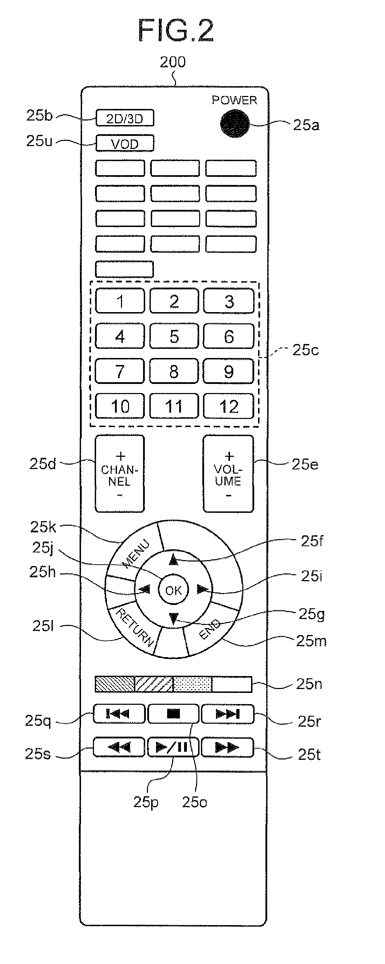

FIG. 2 is a plane view of a example of the exterior of the remote controller 200. As illustrated in FIG. 2, the remote controller 200 mainly comprises a power key 25a, a two dimensional/three dimensional (2D/3D) switch key 25b, numeric keys 25c, a channel up/down key 25d, a volume control key 25e, an up cursor key 25f, a down cursor key 25g, a left cursor key 25h, a right cursor key 25i, an OK key 25j, a menu key 25k, a return key 251, an end key 25m, and color keys 25n in four colors (blue, red, green, and yellow).

The remote controller 200 also comprises a video-on-demand (VOD) key 25u for receiving a VOD service distributing video which the user wishes to watch at any time.

The remote controller 200 also comprises a play stop key 25o, a play/pause key 25p, a backward skip key 25q, a forward skip key 25r, a fast rewind key 25s, a fast forward key 25t, and the like.

Referring back to FIG. 1, the digital TV 1 is configured to receive, fro example, analog terrestrial broadcasting, digital terrestrial broadcasting, broadcast satellite(BS) digital broadcasting, communication satellite (CS) digital broadcasting, and the like. The digital TV 1 comprises, for example, a 2 terabyte hard disk drive (HDD) 170 that is capable of recording programs supplied by the broadcasting.

An antenna 143 for receiving BS/CS digital broadcasting receives a satellite digital TV broadcast signal. The digital broadcast signal is fed via an input terminal 144 to a tuner 145 for satellite digital broadcasting. The tuner 145 tunes the digital broadcast signal, and then outputs it to a phase shift keying (PSK) demodulator 146. The PSK demodulator 146 demodulates a transport stream (TS) and outputs it to a TS decoder 147a. The TS decoder 147a decodes the TS into digital video and audio signals, and then outputs the signals to a signal processor 100.

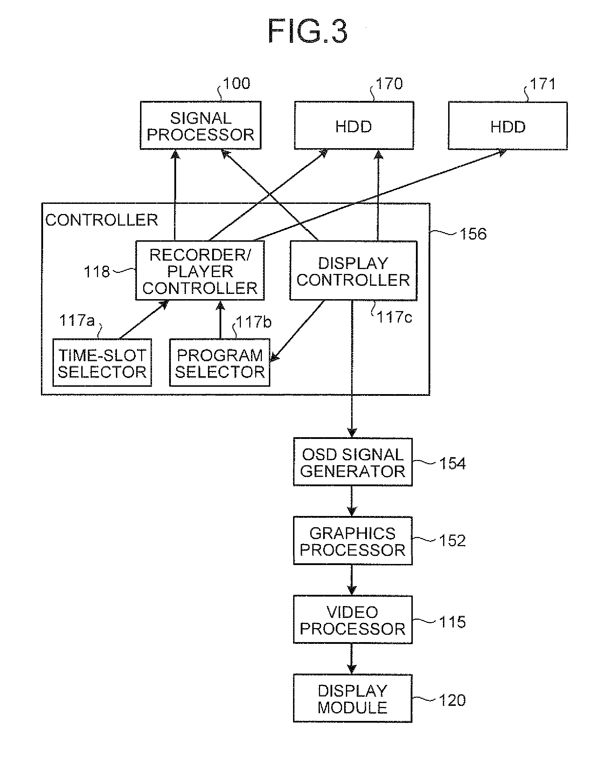

An antenna 148 for receiving digital terrestrial broadcasting receives a digital terrestrial TV broadcast signal. The broadcast signal is fed via an input terminal 149 to a tuner 150 for digital terrestrial broadcasting. In the embodiment, the tuner 150 for digital terrestrial broadcasting comprises 11 tuners (in FIG. 1, they are collectively illustrated as one tuner). Eight out of the 11 tuners of the tuner 150 are used for simultaneous recording of programs on multiple channels broadcasted in a time slot selected by a time-slot selector 117a (see FIG. 3), which will be described later. Meanwhile, two tuners are used for personal video recorder (PVR) recording of a program selected by a program selector 117b (see FIG. 3), which will be described later, and one tuner is used for viewing of a program. The tuner 150 tunes the digital broadcast signal, and then outputs it to an orthogonal frequency division multiplexing (OFDM) demodulator 151.

The OFDM demodulator 151 demodulates a TS and outputs it to a TS decoder 147b. The TS decoder 147b decodes the TS into digital video and audio signals, and then outputs the signals to the signal processor 100. Although not illustrated, the OFDM demodulator 151 includes 11 demodulators and the TS decoder 147b includes 11 decoders each assigned to one of the 11 tuners of the tuner 150. Digital terrestrial TV broadcastings received by the 11 tuners of the tuner 150 are simultaneously decoded into video and audio signals by the demodulators of the OFDM demodulator 151 and the decoders of the TS decoder 147b, respectively, and are output to the signal processor 100.

The antenna 148 can also receive an analog terrestrial broadcast signal. The received analog terrestrial broadcast signal is distributed by a distributer (not illustrated), and is fed to an analog tuner 168. The analog tuner 168 tunes the analog broadcast signal, and then outputs it to an analog demodulator 169. The analog demodulator 169 demodulates the analog broadcast signal and outputs it to the signal processor 100. Besides, for example, by connecting a tuner for common antenna television (CATV) to the input terminal 149 to which the antenna 148 is connected, CATV can also be viewed.

The signal processor 100 performs appropriate digital signal processing on the digital broadcast signal received from the TS decoder 147a or 147b. The digital broadcast signal is separated into a data signal, a video signal, and an audio signal. The data signal contains various types of information indicating broadcast programs as program related information. The program related information includes program information such as the title of a program, the category of the program, channel information indicating a channel that broadcasts the program, date and time information indicating the date and time on and at which the program is broadcasted with respect to each program. The video signal is output to a graphics processor 152, while the audio signal is output to an audio processor 153. The signal processor 100 converts the broadcast signal output from the analog demodulator 169 into an audio signal and a video signal in a predetermined digital format (hereinafter, "content data"). The digitalized video signal is output to the graphics processor 152, while the audio signal is output to the audio processor 153. The signal processor 100 performs predetermined digital signal processing also on an input signal from a line input terminal 137.

An on-screen display (OSD) signal generator 154 generates an OSD signal to display a use interface (UI) screen or the like under the control of the controller 156. Besides, the OSD signal generator 154 converts the data signal separated from the digital broadcast signal by the signal processor 100 into an OSD signal in an appropriate format, and outputs it to the graphics processor 152. Further, the OSD signal generator 154 receives information to display various types of information such as a program guide created by a display controller 117c, which will be described later. The OSD signal generator 154 combines the information with a UI screen and an image of a program currently being viewed, and outputs it to the graphics processor 152.

The graphics processor 152 decodes the digital video signal output from the signal processor 100. The decoded video signal is superimposed with the OSD signal output from the OSD signal generator 154, and then output to a video processor 155. The graphics processor 152 may selectively output the decoded video signal or the OSD signal to the video processor 155.

The video processor 155 converts the signal output from the graphics processor 152 to an analog video signal in a format displayable on a display module 120. The video processor 155 then outputs the analog video signal to the display module 120 to display the video thereon. The video processor 155 may output the video signal to an external display device connected to an external output terminal 135 such as an HDD recorder.

The audio processor 153 converts the input digital audio signal to an analog audio signal in a format reproducible by a speaker 110. The audio processor 153 then outputs the analog audio signal to the speaker 110 to reproduce the sound. The audio processor 153 may output the audio signal to an external audio output device connected to an external output terminal 136 such as amplifier.

A card holder 161 is connected via a card interface (I/F) 160 to the controller 156. A first memory card 119A can be connected to the card I/F 160. The first memory card 119A is a storage medium such as, for example, a secure digital (SD) memory card, a multimedia card (MMC), and a compact flash (CF) card. The first memory card 119A connected to the card holder 161 and the controller 156 can communicate information via the card I/F 160. Thus, the controller 156 can store data such as video, music, and a broadcast program in the first memory card 119A. The controller 156 can also read data such as video, music, and a broadcast program stored in the first memory card 119A and display it on the display module 120 or output it from the speaker 110.

A card holder 163 is connected via a card I/F 162 to the controller 156. A second memory card 119B can be connected to the card I/F 162. The second memory card 119B is a storage medium that stores, for example, contract information on broadcast subscription contract. The second memory card 119B connected to the card holder 163 and the controller 156 can communicate information via the card I/F 162.

A first local area network (LAN) terminal 131 is connected via a communication I/F 164 to the controller 156. The first LAWN terminal 131 is used as a LAN-compatible HDD port using the Ethernet (registered trademark) . If a LAN-compatible HDD 171 as a network attached storage (NAS) is connected to the first LAN terminal 131, the HDD 171 and the controller 156 can communicate information via the communication I/F 164. In this case, the controller 156 functions as a dynamic host configuration protocol (DHCP) server, and assigns an Internet protocol (IP) address to the LAN-compatible HDD 171 connected to the first LAN terminal 131 to control it.

A second LAN terminal 132 is connected via a communication I/F 165 to the controller 156. The second LAN terminal 132 is used as a general LAN-compatible port using the Ethernet (registered trademark). To the second LAN terminal 132, a device such as a LAN-compatible HDD, a personal computer (PC), or a digital versatile disk (DVD) recorder having a built-in HDD is connected using, for example, a hub. The device connected to the second LAN terminal 132 and the controller 156 can communicate information via the communication I/F 165. If a broadband router is connected via a hub to the second LAN terminal 132, the controller 156 can connect to a network such as the Internet via the broadband router. PCs and mobile telephones are connected to the network, and they can communicate information with the digital TV 1.

To a device such as an HDD, a PC, a DVD recorder connected via the communication I/F 165 to the controller 156, a storage medium such as a hard disk, DVD (optical disk), or the like can be connected. The controller 156 can store data such as video, music, and a broadcast program in the storage medium via the hub and the device connected to the hub. The controller 156 can also read data such as video, music, and a broadcast program stored in the storage medium and display it on the display module 120 or output it from the speaker 110.

A universal serial bus (USB) terminal 133 is connected via a USB I/F 166 to the controller 156. The USB terminal 133 is used as a general USB-compatible port. To the USB terminal 133, a mobile telephone, a digital camera, a card reader/writer for various types of memory cards, the HDD 171, and a keyboard, or the like is connected via, for example, a hub. The controller 156 can communicate information with a device connected via the USB terminal 133.

The controller 156 can store content data, video, music, and various types of information (for example, content data and program related information contained in a data signal separated from a digital broadcast signal, simultaneous recording channel information indicating channels selected in advance for simultaneous recording, and the like) in the HDDs 170 and 171. The controller 156 obtains program related information contained in a data signal separated from a digital broadcast signal by the signal processor 100 at regular time intervals, and updates program related information stored in the HDD 170 with the obtained program related information. With this, the HDD 170 always stores the latest program related information. The controller 156 can also read content data, video, or music stored in the HDD 170 or 171 and display it on the display module 120 or output it from the speaker 110.

In the embodiment, under the control of a recorder/player controller 118 (see FIG. 3), which will be described later, the HDD 170 is used for simultaneous recording of content data of programs on multiple channels broadcasted in a time slot selected by the time-slot selector 117a (see FIG. 3), which will be described later. Meanwhile, under the control of the recorder/player controller 118, the HDD 171 is used for PVR recording of content data of a program selected by the program selector 117b (see FIG. 3), which will be described later.

FIG. 3 is a block diagram of a functional block related to recording of content data in the digital TV 1 of the embodiment. FIG. 3 illustrates the signal processor 100, the HDDs 170 and 171, the controller 156, the OSD signal generator 154, the graphics processor 152, the video processor 155, the display module 120, the recorder/player controller 118, the time-slot selector 117a, the program selector 117b, and the display controller 117c.

The recorder/player controller 118 records content data separated from a digital broadcast signal by the signal processor 100 on the HDDs 170 and 171. The recorder/player controller 118 also reproduces content data recorded on the HDDs 170 and 171, thereby displaying it on the display module 120 or outputting it from the speaker 110.

Before recording content data on the HDDs 170 and 171, the recorder/player controller 118 adds identification information of the content data to the content data to be recorded. The identification information identifies the content data, and include, regarding the recorded content data, the title of a program, the category of the program, the date and time on and at which the content data of the program is recorded, channel information indicating a channel that broadcasts the program the content data of which is recorded, and the like. The identification information is obtained from program related information contained in a data signal separated from a digital broadcast signal.

The recorder/player controller 118 of the embodiment performs two types of recording, i.e., simultaneous recording and PVR recording. In the case of simultaneous recording, the recorder/player controller 118 obtains content data of multiple channels indicated by simultaneous recording channel information stored in the HDD 170 from the signal processor 100 in a time slot selected by the time-slot selector 117a. The recorder/player controller 118 then records the content data of multiple channels on the HDD 170.

To record content data on the HDD 170, the recorder/player controller 118 secures a space to record the new content data, and records the content data in the secured space. If content data has already been recorded in the secured space, the recorder/player controller 118 overwrites the already recorded content data with the new content data. The space of the HDD 170 is divided with respect to channels for simultaneous recording such that the recorder/player controller 118 records content data separately for the channels.

Meanwhile, in the case of PVR recording, the recorder/player controller 118 obtains content data of a program selected by the program selector 117b from the signal processor 100. The recorder/player controller 118 then records the content data on the HDD 171.

Upon recording content data on the HDD 171, the recorder/player controller 118 records the content data in a free space where no content data is stored in the space of the HDD 171. If there is no free space in the HDD 171, the recorder/player controller 118 deletes content data already recorded on the HDD 171 to obtain a free space. The recorder/player controller 118 records the content data in the free space thus obtained.

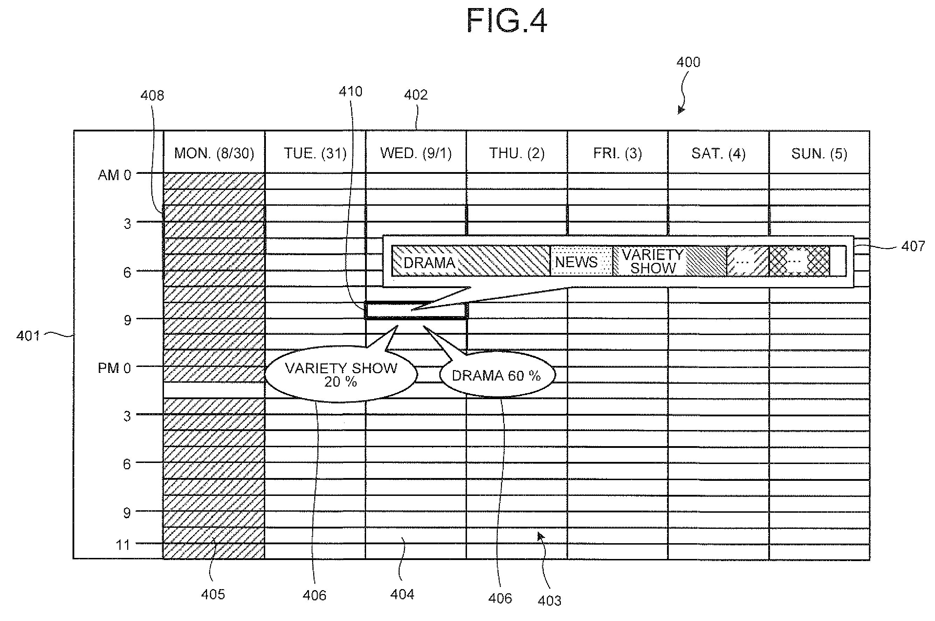

The time-slot selector 117a selects, from time slots indicated by time slot cells 403 (see FIG. 4) arranged in a simultaneous recording program list 400 (see FIG. 4), one or more time slots in which simultaneous recording is performed by the recorder/player controller 118. When a cursor 410 (see FIG. 4) is moved on the simultaneous recording program list 400 (see FIG. 4) displayed by the display controller 117c and the OK key 25j is pressed on the remote controller 200, the time-slot selector 117a of the embodiment selects a time slot indicated by the slot cell 403 (see FIG. 4) on which the cursor 410 is placed as a time slot for simultaneous recording. While an example is described above in which a time slot is selected in time unit represented by the time slot cell 403, a plurality of time slots indicated by the time slot cells 403 may be selected. For example, by moving the cursor 410 onto date information 402, all time slots of the day indicated by the date information 402 may be selected.

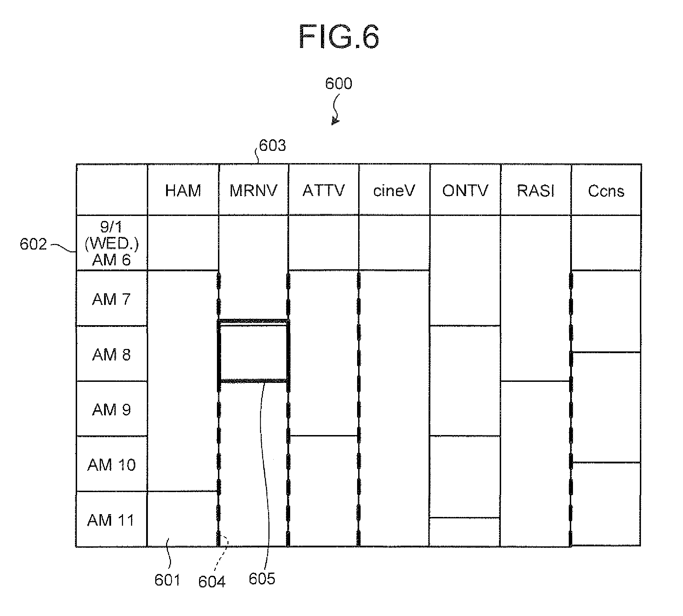

The program selector 117b selects a program for PVR recording by the recorder/player controller 118 from programs indicated by program information 601 arranged in a program guide 600 (see FIG. 6). When a cursor 605 (see FIG. 6) is moved on the program guide 600 displayed on the display module 120 by the display controller 117c and the OK key 25j is pressed on the remote controller 200, the program selector 117b of the embodiment selects a program indicated by the program information 601 on which the cursor 605 is placed as a program for PVR recording.

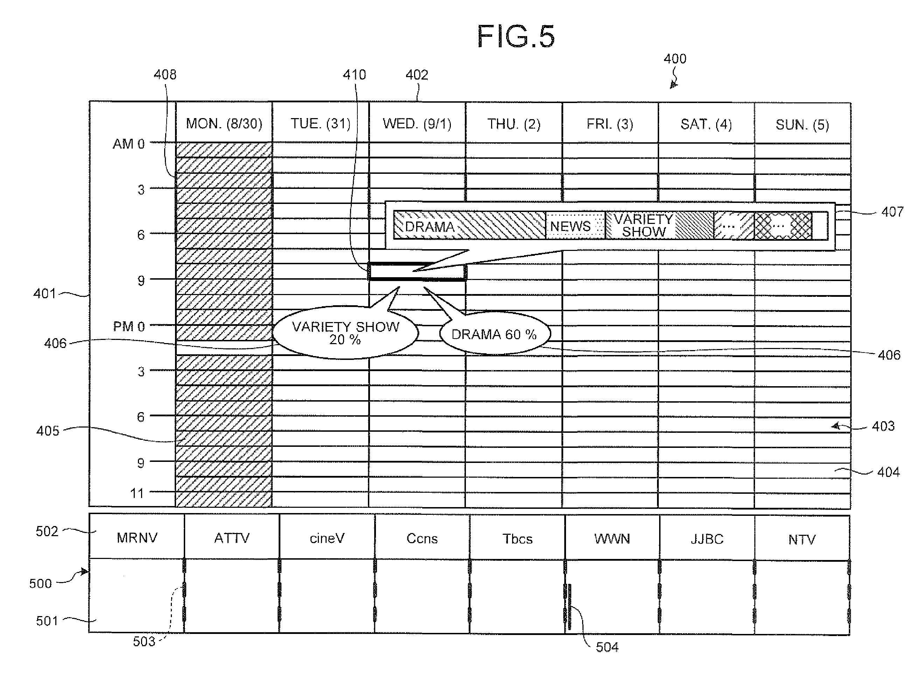

The display controller 117c displays on the display module 120 the simultaneous recording program list 400 (see FIG. 4) indicating time slots in which digital terrestrial broadcast programs are broadcasted arranged with respect to each day. FIGS. 4 and 5 illustrate examples of the simultaneous recording program list 400 displayed on the display module 320. The display controller 117c of the embodiment displays on the display module 120 the simultaneous recording program list 400 in which the time slot cells 403, each indicating a time slot when digital terrestrial broadcast programs are broadcasted on a one-hour basis, are associated with the date information 402 and arranged along a time axis indicated by a time axis bar 401.

The user can select a time slot for simultaneous recording by moving the cursor 410 displayed on the simultaneous recording program list 400 to desired one of the time slot cells 403 using the up cursor key 25f, the down cursor key 25g, the left cursor key 25h, and the right cursor key 25i on the remote controller 200 and presses the OK key 25j. When the time-slot selector 117a selects a time slot for simultaneous recording, for example, among the time slot cells 403 displayed on the simultaneous recording program list 400, the display controller 117c displays time slot cells 405 indicating a selected time slot in blue while displaying time slot cells 404 indicating nan-selected time slots in white. In such a manner, the display controller 117c displays the time slot cells 405 indicating a selected time slot in a different way from the other time slot cells 404. This allows the user to recognize a time slot for simultaneous recording and the other at a glance.

The display controller 117c also displays information (related information) related to programs broadcasted in a time slot selected by the time-slot selector 117a (a time slot indicated by the time slot cell 403 onto which the cursor 410 is moved) with the simultaneous recording program list 400. The display controller 117c of the embodiment obtains, from program related information stored in the HDD 170, the entire program information (program ID, title, category, channel information, date and time information, etc.) including date and time information indicating a time of a time slot selected by the time-slot selector 117a and a date indicated by the date information 402 associated with the selected time slot cell 403. According to the obtained program information, the display controller 117c displays, as the related information, a popup 406 indicating categories (for example, drama, variety show, etc.) of programs broadcasted in a time slot to be selected by the time-slot selector 117a and the ratios of the categories (for example, 20%, 60%, etc.) and a popup 407 of a graph indicating the ratios of the categories of the programs broadcasted in the time slot. This allows the user to select a time slot for simultaneous recording while checking information related to programs broadcasted in a time slot on which the cursor 410 is placed. Thus, the function of simultaneously recording programs on multiple channels is improved in usability and can be used effectively.

In the embodiment, when the cursor 410 is moved to one of the time slot cells 403, the display controller 117c obtains program information from program related information stored in the HDD 170. According to the obtained program information, the display controller 117c calculates (obtains) the ratios of categories of programs broadcasted in a selected time slot. However, it is not so limited. Even if the simultaneous recording program list 400 is not being displayed, the display controller 117c may obtain program information from program related information stored in the HDD 170 at regular time intervals. In this case, the display controller 117c performs background processing in which, according to the obtained program information, the display controller 117c calculates (obtains) in advance the ratios of categories of programs broadcasted in a time slot indicated by each of the time slot cells 403 arranged in the simultaneous recording program list 400.

Further, according to program information obtained from program related information, the display controller 117c may display, as the related information, channel information of channels indicated by simultaneous recording channel information among channels that broadcast programs in a time slot selected by the time-slot selector 117a (or channel information of channels other than those indicated by simultaneous recording channel information). More specifically, from channel information contained in program information obtained from program related information stored in the HDD 170, the display controller 117c may display a popup indicating channel information of channels indicated by simultaneous recording channel information (or channel information of channels other than those indicated by simultaneous recording channel information).

Further, the display controller 117c displays a line 408 on the left side of the time slot cells 403 indicating a time slot in which a program for PVR recording selected by the program selector 117b is broadcasted. More specifically, the display controller 117c obtains program information of a program selected by the program selector 117b from program related information stored in the HDD 170. Using the date and time indicated by date and time information contained in the obtained program information, the display controller 117c specifies the time slot cell 403 indicating a time slot in which a program selected by the program selector 117b is broadcasted from the time slot cells 403 arranged in the simultaneous recording program list 400. The display controller 117c then displays the line 408 on the left side of the specified time slot cell 403. This allow the user to check a selected program for PVR recording on the simultaneous recording program list 400 without referring to the program guide 600 (see FIG. 6).

While the display controller 117c is described above as displaying the line 408 on the left side of the time slot cell 403 indicating a time slot in which a program selected by the program selector 117b is broadcasted, it is not so limited. The display controller 117c is only required to display a time slot in which a program selected by the program selector 117b is broadcasted in a different way from other time slots. For example, the display controller 117c may display the time slot cell 403 indicating a time slot in which a program selected by the program selector 117b is broadcasted in a shaded manner.

If the blue color key 25n is pressed on the remote controller 200 while the simultaneous recording program list 400 is displayed on the display module 120, the display controller 117c obtains, from program related information stored in the HDD 170, program information including date and time information indicating a time contained in a time slot indicated by the time slot cell 403 onto which the cursor 410 is moved and a date indicated by the date information 402 associated with the time slot cell 403 on which the cursor 410 is placed. Then, as illustrated in FIG. 5, the display controller 117c displays a mini program guide 500 (the first program guide), in which program information 501 (for example, program title, program content, category, etc.) obtained from the program related information is arranged for each of channels 502, with the simultaneous recording program list 400 on the display module 120. That is, the display controller 117c displays the mini program guide 500, in which the program information 501 on a program broadcasted in a time slot indicated by the time slot cell 403 onto which the cursor 410 is moved is arranged for each of the channels 502, with the simultaneous recording program list 400. This allows the user to recognize details of programs broadcasted in a time slot for simultaneous recording while checking the time slot for simultaneous recording on the simultaneous recording program list 400.

The display controller 117c also displays a line 503 on the left side of the program information 501 on a program broadcasted by a channel indicated by simultaneous recording channel information stored in the HDD 170 among pieces of the program information 501 arranged in the mini program guide 500. Further, the display controller 117c displays a line 504 on the left side of the program information 501 on a program selected by the program selector 117b among pieces of the program information 501 arranged in the mini program guide 500. While an example is described above in which the lines 503 and 504 are displayed on the left side the program information 501, it is not so limited. It is only required to display the program information 501 on a program broadcasted by a channel for simultaneous recording or a program for PVR recording in a different way from program information on other programs.

If the red color key 25n is pressed on the remote controller 200 while the simultaneous recording program list 400 is displayed on the display module 120, the display controller 117c obtains, from program related information stored in the HDD 170, the entire program information indicating a time in a predetermined time slot including a time slot indicated by the time slot cell 403 onto which the cursor 410 is moved and a date indicated by the date information 402 associated with the time slot cell 403 on which the cursor 410 is placed. The display controller 117c then displays the program guide 600 (see FIG. 6) in which the obtained program information 601 is arranged on the display module 20 in place of the simultaneous recording program list 400. That is, the display controller 117c displays the program guide 600, in which the program information 601 on a program broadcasted in a predetermined time slot including a time slot indicated by the time slot cell 403 onto which the cursor 410 is moved is arranged, in place of the simultaneous recording program list 400.

FIG. 6 illustrates an example of display of the program guide 600. In the embodiment, the display controller 117c displays on the display module 120 the program guide 600 (the second program guide) in which pieces of the program information 601 on programs broadcasted in a plurality of time slots including a time slot indicated by the time slot cell 403 onto which the cursor 410 is moved are arranged along a time axis 602 with respect to each of channels 603. The display controller 117c displays a line 604 on the left side of the program information 601 on a program broadcasted in a time slot selected by the time-slot selector 117a (i.e., the program information 601 including date and time information indicating a time included in a time slot selected by the time-slot selector 117a) among pieces of the program information 601 displayed on the program guide 600. While an example is described above in which the line 604 is displayed on the left side of the program information 601 on a program broadcasted in a time slot selected by the time-slot selector 117a, it is not so limited. It is only required to display the program information 601 on a program broadcasted in a time slot selected by the time-slot selector 117a in a different way from the program information on other programs. For example, the display controller 117c may display the program information 601 on a program broadcasted in a time slot selected by the time-slot selector 117a in a shaded manner. Further, by displaying a line or the like along the time axis 602 at a position indicating a time slot selected by the time-slot selector 117a, the display controller 117c may display the selected time slot and others in different manners regarding the time axis 602.

With this, the user can check selected programs for simultaneous recording as well as a program for PVR recording by both the simultaneous recording program list 400 and the program guide 600. Thus, the user can check all selected programs to be recorded and determine whether a program is selected for both simultaneous recording and PVR recording, which enables effective selection of a program.

The user can select a program for PVR recording by moving the cursor 605 displayed on the program guide 600 to the program information 601 on a desired program using the up cursor key 25f, the down cursor key 25g, the left cursor key 25h, and the right cursor key 25i on the remote controller 200 and presses the OK key 25j.

If the red color key 25n is pressed on the remote controller 200 while the program guide 600 is displayed on the display module 120, the display controller 117c displays the simultaneous recording program list 400 containing the time slot cell 403 indicating a time slot in which a program indicated by the program information 601 onto which the cursor 605 is moved is broadcasted. More specifically, if the red color key 25n is pressed on the remote controller 200 while the program guide 600 is displayed on the display module 120, the display controller 117c displays the simultaneous recording program list 400 containing date information (the time axis) 602 indicating a date indicated by date and time information contained in the program information 601 onto which the cursor 605 is moved, and the time slot cell 403 indicating a time slot including a time indicated by the date and time information contained in the program information 601 onto which the cursor 605 is moved. That is, the display controller 117c switches information displayed on the display module 120 between the simultaneous recording program list 400 and the program guide 600 in response to pressing of the red color key 25n on the remote controller 200.

If the information displayed on the display module 120 is switched from the program guide 600 to the simultaneous recording program list 400, the display controller 117c displays the cursor 410 on the simultaneous recording program list 400 at the time slot cell 403 indicating a time slot in which a program indicated by the program information 601 on which the cursor 605 is placed on the program guide 600 (i.e., a time slot including a time indicated by date and time information contained in the program information 601 onto which the cursor 605 is moved) . With this, even if displayed information is switched between the simultaneous recording program list 400 and the program guide 600, the user can check a time slot in which a program indicated by the program information 601 on which the cursor 605 is placed on the program guide 600 is broadcasted by the simultaneous recording program list 400. The user can also check content broadcasted in a time slot indicated by the time slot cell 403 on which the cursor 410 is placed on the simultaneous recording program list 400 by the program guide 600. This facilitates to combined operation of selecting a time slot for simultaneous recording in parallel with selecting a program for PVR recording, and also to recognize the relationship between a time slot for simultaneous recording and a program for PVR recording.

While display information is described above as being switched between the simultaneous recording program list 400 and the program guide 600 in response to pressing of the red color key 25n on the remote controller 200, it is not so limited. It is only required that display information can be switched between the simultaneous recording program list 400 and the program guide 600 by using the same key.

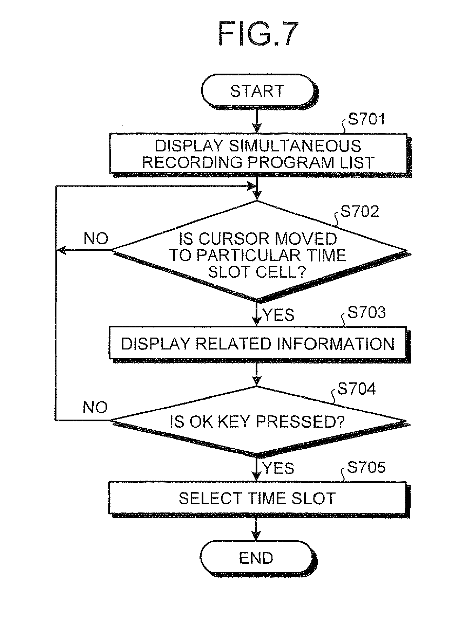

FIG. 7 is a flowchart of the process of selecting a time slot for simultaneous recording from the simultaneous recording program list 400. First, the display controller 117c displays the simultaneous recording program list 400 (S701). Then, if the cursor 410 is moved to a desired one of the time slot cells 403 (Yes at S702), the display controller 117c displays information related to programs on multiple channels broadcasted in a time slot to be selected by the time-slot selector 117a, i.e., a time slot indicated by the time slot cell 403 onto which the cursor 410 is moved (S703). After that, if the OK key 25j is pressed on the remote controller 200 (Yes at s704), the time-slot selector 117a selects the time slot indicated by the time slot cell 403 on which the cursor 410 is placed as a time slot for simultaneous recording by the recorder/player controller 118 (S705).

As described above, according to the embodiment, the digital TV 1 displays the simultaneous recording program list 400 in which the time slot cells 403, each indicting a time slot during which programs on multiple channels are broadcasted on a one-hour basis, are arranged. If the cursor 410 is moved to one of the time slot cells 403, a time slot indicated by the time slot cell 403 is selected as a time slot for simultaneous recording. Then, the digital TV 1 displays information related to programs on multiple channels broadcasted in the time slot indicated by the time slot cell 403 onto which the cursor 410 is moved. This allows the user to select a time slot for simultaneous recording while checking information related to programs broadcasted in the time slot. Thus, the function of simultaneously recording programs on multiple channels is improved in usability and can be used effectively.

A computer program can be executed on a computer to realize the same function as the digital TV 1 of the embodiment. The computer program may be provided as being stored in advance in ROM or the like. The computer program may also be provided as being stored in a computer-readable storage medium, such as a compact disc-read only memory (CD-ROM), a flexible disk (FD), a compact disc recordable (CD-R), and a digital versatile disc (DVD), as a file in an installable or executable format.

The computer program may also be stored in a computer connected via a network such as the Internet so that it can be downloaded therefrom via the network. Further, the computer program may be provided or distributed via a network such as the Internet.

The computer program includes modules that implement the constituent elements described above (the recorder/player controller 18, the time-slot selector 117a, the program selector 117b, the display controller 117c, and the like). As real hardware, the CPU (processor) loads the computer program from the ROM 157 into the main memory and executes it. Thus, the recorder/player controller 118, the time-slot selector 117a, the program selector 117b, the display controller 117c, and the like are implemented on the main memory.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A recorder (100) comprising:
a display controller (117c) configured to display a simultaneous recording program list (400) indicating time slots, in which programs on multiple channels are broadcasted, arranged with respect to each day;
a time-slot selector (117a) configured to select at least one time slot from the time slots arranged on the simultaneous recording program list (400) displayed by the display controller (117c); and
a simultaneous recorder (118) configured to simultaneously record programs on multiple channels broadcasted in the time slot selected by the time-slot selector (117a), wherein
the display controller (117c) is configured to display related information related to the programs on the multiple channels broadcasted in the time slot selected by the time-slot selector (117a) together with the simultaneous recording program list (400).

2. The recorder (100) of Claim 1, further comprising:
a program selector (117b) configured to select a program to be recorded; and
a recorder (118) configured to record a program selected by the program selector (117b), wherein
the display controller (117c) is configured to display, among the time slots arranged on the simultaneous recording program list (400), a time slot in which the program selected by the program selector (117b) is broadcasted differently from other time slots.

3. The recorder (100) of Claim 1 or 2, wherein the display controller (117c) is configured to display, together with the simultaneous recording program list (400), a first program guide in which pieces of program information indicating the programs on the multiple channels broadcasted in the time slot selected by the time-slot selector (117a) are arranged with respect to each channel.

4. The recorder (100) of one of Claims 1 to 3, wherein the display controller (117c) is configured to display a second program guide (600) in which pieces of program information indicating programs on the multiple channels broadcasted in predetermined time slots including the time slot selected by the time-slot selector (117a) are arranged with respect to each channel without displaying the simultaneous recording program list (400).

5. The recorder (100) of Claim 4 as dependent on Claim 2, wherein the display controller (117c) is configured to display the simultaneous recording program list (400) in which the predetermined time slots including the time slot in which the program selected by the program selector (117b) is broadcasted are arranged without displaying the second program guide (600).

6. The recorder (100) of Claim 4 or 5, wherein the display controller (117c) is configured to display, among the pieces of program information arranged in the second program guide (600), program information on the programs broadcasted in the time slot selected by the time-slot selector (117a) differently from program information on other programs.

7. The recorder (100) of one of Claims 1 to 6, wherein the display controller (117c) is configured to display, together with the simultaneous recording program list (400), categories of the programs on the multiple channels broadcasted in the time slot selected by the time-slot selector (117a) as the related information.

8. The recorder (100) of one of Claims 1 to 7, wherein the display controller (117c) is configured to display, together with the simultaneous recording program list (400), ratios of categories of the programs on the multiple channels broadcasted in the time slot selected by the time-slot selector (117a) as the related information.

9. A recording method comprising:
displaying a simultaneous recording program list indicating time slots, in which programs on multiple channels are broadcasted, arranged with respect to each day;
selecting at least one time slot from the time slots arranged on the simultaneous recording program list displayed at the displaying; and
simultaneously recording programs on multiple channels broadcasted in the time slot selected at the selecting, wherein
information related to the programs on the multiple channels broadcasted in the time slot selected at the selecting is displayed together with the simultaneous recording program list.
